(19) Europäisches Patentamt
European Patent Office
Office européen des brevets

(11) Publication number: 0 188 092
A1

(12) EUROPEAN PATENT APPLICATION

(21) Application number: 85309039.7

(22) Date of filing: 12.12.85

(51) Int. Cl.⁴: F 01 K 25/00
C 01 B 3/06, F 42 B 19/20

(30) Priority: 13.12.84 US 681160

(43) Date of publication of application:
23.07.86 Bulletin 86/30

(84) Designated Contracting States:
DE FR GB IT SE

(71) Applicant: THE GARRETT CORPORATION
9851-9951 Sepulveda Boulevard P.O. Box 92248
Los Angeles, California 90009(US)

(72) Inventor: Hubele, Norman Dale
11019 South Tewa Street
Phoenix Arizona(US)

(72) Inventor: Johnson, Kim Lawrence
10437 South 49th Street
Phoenix Arizona(US)

(74) Representative: Rees, David Christopher et al,
Kilburn & Strode 30 John Street
London WC1N 2DD(GB)

(54) **Reaction system for a heat engine.**

(57) A fuel composition for a reaction chamber which when combined with a selected reactant produces heat energy and hydrogen gas. A reaction chamber structure, method of making and method of operating the reaction chamber are also disclosed.

A reaction system for a Rankine cycle steam engine in which water is reacted with a two-part fuel to produce heat and hydrogen. The starting part (38) of the fuel comprises lithium hydride, aluminium and magnesium and is the first to be contacted by the water. The heat of reaction liberated melts the main part (40) of the fuel, which comprises magnesium and aluminium which then also reacts with the water. The water is introduced through an inlet (14), the hydrogen leaves via an outlet (16) and the heat is removed by a heat exchanger (20).

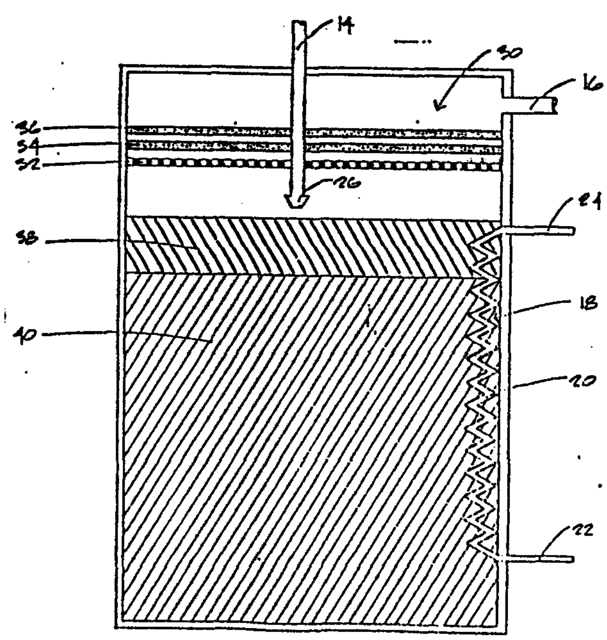


FIG. 2

EP 0 188 092 A1

Croydon Printing Company Ltd.

# REACTION SYSTEM FOR A HEAT ENGINE.

The present invention is concerned with a reaction system for heat engines, such as Rankine cycle vapour pressure or steam engines, which obtain their driving heat energy from a chemical reaction other than the usual combustion of fuel with oxygen from the air. The theoretical possibility of using the reaction energy of a reactive metal fuel such as aluminium, magnesium, lithium, and alloys or hydrides of these and similar reactants, with an "oxidiser" such as hydrogen peroxide, freons, sulphur hexaflouride, water, and others, has been recognised for many years. However, the technical difficulties and conflicts standing between a theoretical construction of such a power system and a practical apparatus which is functional outside of the laboratory are legion.

By way of example, many of the fuel-reactant combinations proposed in the past require that the fuel be raised above ordinary ambient temperatures in order to permit the reaction with the reactant to take place. Such a heating requirement necessitates that some heating means, such as electrical heating coils or pyrotechnic chemicals, be provided. In the former case a significant start-up delay is incurred while a portion or all of the fuel is raised to the reaction temperature. In the latter case, the pyrotechnic chemicals, which are or may be considered to be low velocity explosives, present the possibility of rupturing the reaction chamber with a subsequent escape of highly reactive or toxic fuels. Such pyrotechnic heating chemicals also frequently produce a quantity of gaseous

reaction products which must be contained within the reaction chamber, or else vented therefrom while preventing loss of fuel.

Another undesirable aspect of many previously proposed fuel-reactant systems is that intermediate reaction products or end reaction products are formed which on the one hand inhibit further progress of the reaction between the fuel and reactant, or on the other hand freeze at a temperature higher than the desired reaction chamber temperature. In the former case, complex structures and methods have been proposed to cure this shortcoming by removing the intermediate or final reaction product from the reaction chamber. Alternatively, only a portion of the fuel is sometimes brought into contact with the reactant so that reaction products can not contaminate the remaining fuel. Again, complexity is substantially increased.

The problem of the reaction intermediates or final products freezing at too high a temperature presents the difficultly that the reaction chamber may soon become filled with a "slush" of frozen reaction products in a slurry of molten fuel. Similarly, the high-freezing constituents present in the reaction chamber may form a "frost" or crust on the coolest surfaces present. These cool surfaces will generally be heat transfer surfaces where it is desired to transfer heat from the chemical reaction for use in the steam or vapour pressure Rankine cycle engine. Such a crust on the heat transfer surfaces will ordinarily have a relatively high insulation value in comparison with the molten fuel. As a result, the crusted reaction products

themselves progressively inhibit heat transfer from the reaction chamber to the engine.

A novel approach to these problems has been proposed in the present Applicants' copending European Patent Application No . based on US Serial No.681 160 having the same filing date as the present application. In the system disclosed therein, a fuel is reacted with water in the absence of oxygen to produce heat and hydrogen. The heat from this reaction is used to produce water-steam. The hydrogen is burned with oxygen in a separate second reaction chamber to produce super-heated steam. The steam from the first reaction chamber is used as a coolant and diluent in the second reaction chamber so that steam flowing from the second reaction chamber to a turbine, or to some other expander, has a metalurgically acceptable temperature. The disclosure of the Co-pending Application is incorporated herein by reference to the extent necessary for a complete understanding of the present invention.

Possible shortcoming of this proposal is that a hydrogen-bearing reaction intermediate is formed which initially partially prevents the evolution of the hydrogen from the first reaction chamber. As the reaction progresses, the reaction intermediate further reacts to release the bound hydrogen. The result is that over the period of the reaction, the rate of hydrogen production is at first relatively low, reaches a stable plateau, and then rises above the plateau as the fuel supply is consumed.

A consequence of this nonuniform rate of hydrogen production is that the power output of the Rankine

cycle steam engine is relatively low initially and cannot be increased until the hydrogen production rate of the chemical reaction chamber increases. Understandably, this sluggish initial power output of such a system may be undesirable in many applications. Additionally, the overall nonuniform rate of hydrogen production creates many difficulties in controlling the power output level of the Rankine cycle engine.

It is an object of the present invention to provide a reaction system in which a fuel composition reacts to produce a gas at a substantially uniform rate during the life of the fuel supply.

It is a further object of this invention to provide such a reaction system with a fuel composition which is reactive with water at common ambient temperatures to produce hydrogen, and which does not require preheating or pyrotechnic chemicals, for example, to be used in starting the reaction.

According to one aspect of the present invention, there is provided a reaction system for an engine in which a fuel is reacted with a reactant to produce heat which is converted to mechanical energy characterised in that the fuel is a two-part fuel, the first fuel part comprising lithium hydride and a metal, and the second fuel part comprising a metal, and in that the reactant first reacts with the first fuel part to liberate a gas and to produce heat which raises the temperature of the second fuel part to enable the second fuel part to react with the reactant in order to produce a gas and to produce heat.

Preferably the first fuel part is a hypergolic starting fuel part and the metal constituent comprises magnesium and/or aluminium. Preferably, the starting

fuel part is composed essentially of lithium hydride, metallic magnesium and metallic alluminium in substantially equal molar relationship.

Preferably, the second fuel part is a main fuel part which comprises magnesium and/or aluminium. Preferably, the main fuel part is composed essentially of metallic aluminium and metallic magnesium substantially in a 2:1 molar relationship respectively. Preferably the first fuel part and the second fuel part are present substantiallyin a 1:4 weight relationship respectively.

Preferably, the reactant is water and the gas produced by the first and second fuel parts is hydrogen.

Conveniently, the fuel is reacted in a reaction chamber having an inlet for the reactant, and an outlet for the gas produced, and heat transfer means in heat exchange relationship with the fuel. Preferably, therefore, the gas produced leaves through the outlet via filter means comprising a perforate plate and a felt metal pad between the fuel and the outlet, thereby allowing substantially only gas produced to flow from the reaction chamber.

In a prefered system, the second fuel part is disposed in a lower region of the chamber; the first fuel part is disposed as a layer upon the second fuel part; the inlet is located above and spaced apart from fuel, whereby reactant from the inlet first contacts the first fuel part and then the second fuel part; and the outlet is located above the inlet. In such a system, the inlet includes a conduit above the fuel terminating in a nozzle for causing the reactant to penetrate the fuel.

In an alternative system, the outlet includes foraminous distributor disposed within the fuel, with the first fuel part surrounding the distributors and the second fuel part surrounding the first fuel part.

In such a system, the inlet includes a manifold for directing the reactant to the distributors which are spaced apart within the fuel. The starting fuel part may be applied as a thin layer around the distributors.

Preferably the filter means is located in an upper region of the chamber, above the fuel, with the felt metal pad above the perforate plate. Preferably the perforate plate comprises multiple apertures of substantially 0.125 inch (3.2mm) diameter and in aggregate comprising substantially 60% of the area of the plate. Preferably, the felt metal pad comprises metallic filaments of substantially 0.006 inch (0.015mm) size in aggregate comprising substantially 60% of the bulk density of the pad and cooperating to yield a pore size of substantially 95µ inch (2.4µm).

In the system according to the present invention, the fuel may be present in the form of prealloyed powders produced, for example, from condensed vaporized or atomized metal.

Thus, in a preferred system in accordance with the invention, water is reacted with a hydride of a reacting fuel element to form a hydroxide of the fuel element, which hydroxide is further reactive with a first mixture of fuel elements being rather less reactive than the hydride of the first fuel element. The heat liberated from the above described reaction is employed to raise the temperature of the less

reactive fuel elements to a level where they are vigorously reactive with the present hydroxide and with water.

According to another aspect of the invention, there is provided a method of reacting water with a fuel to produce hydrogen and to liberate heat for use in a Rankine cycle engine, the method comprising the steps of:- reacting water with a mixture of lithium hydride with aluminium and/or magnesium to produce both hydrogen gas and heat energy; using a portion of the heat energy to liquify a mass of metallic fuel including aluminium; reacting water with the liquefied fuel mass to produce additional hydrogen gas and additional heat energy; providing heat transfer means in association with the fuel mass for transferring part of the initial heat energy and the additional heat energy to an energy utiliser; and providing means for transferring the hydrogen gas to a utiliser therefor, substantially free of contamination. The hydrogen may be reacted with oxygen to produce superheated steam which can then be used to drive a turbine in order to provide propulsion. The steam produced in the reaction system of the present inventioon may be used to quench partially the superheated steam.

The advantages offered by the present invention include the absence of any need or requirement to provide fuel preheating before the reaction chamber is operational. Further, the introduction of simple water is all that is required to initiate operation of the reaction chamber to produce both heat and a supply of hydrogen. This latter feature is of particular advantage when the invention is used in connection

with a water-borne vehicle. Understandably, a quantity of the available water may be used in the Rankine cycle steam engine, eliminating entirely the need to store water aboard the vehicle for such use.

Furthermore, the rate of heat and hydrogen production may be moderated during the life of the available fuel supply by controlling the rate of water supply to the reaction chamber so that the Rankine cycle engine may be throttled. Additionally, the rate of hydrogen production during the use of the fuel supply is substantially uniform in proportion to moderation of the reaction rate with the rate of water supply. The reaction intermediates and final reaction products do not seriously interfere with heat transfer out of the reaction chamber.

The applicants have also discovered that the present invention may virtually eliminate any anticipated difficulties in separating the evolved hydrogen from the reaction products and fuel. This separation is essential to prevent fuel and reaction products being carried into and damaging the steam expander of the Rankine cycle engine. Surprisingly, the fuel composition and reaction chamber of the present invention allows a very simple filter structure to be interposed between the fuel and the hydrogen outlet from the reaction chamber which may accomplish almost perfect filtering of the evolved hydrogen.

The invention may be carried into practice in various ways and some embodiments will now be described by way of example with reference to the accompanying drawings in which:-

Figure 1 is a schematic vertical section through a reaction chamber according to the present invention;

Figure 2 is a view similar to Figure 1 showing an alternative embodiment of a reaction chamber according to the invention; and

Figure 3 shows graphically a comparison of the rates of hydrogen production from reactions according to the present invention, and according to the reaction system described in in the present Applicants co-pending application described above.

Refering firstly to Figure 1, a reaction chamber 10 includes a vessel 12 defining a reaction water inlet 14 and a hydrogen outlet 16. Additionally, the vessel 12 includes structure 18 for transfering heat from the interior of vessel 12 to a Rankine cycle or other heat engine (not illustrated ). The heat transfer structure is shown as a boiler tube 20 passing into the vessel 12 at 22 to define a water inlet, and passing out of the vessel at 24 to define a steam outlet, though other known constructions for effecting heat exchange may be employed.

Within the vessel 12, the reaction water inlet 14 communicates with a manifold 26 having a plurality of foraminous water distribution tubes 28 depending therefrom. Also located within the vessel 12 is a hydrogen filter structure 30 surrounding the inlet 14. The hydrogen filter 30 includes a lower perforate plate 32, and a pair of felt-metal pads 34,36 above the plate 32.

A selected quantity of a first or starting fuel part 38 surrounds the tubes 28. The starting fuel 38 is disposed within the reaction chamber 10 somewhat in the form of a coating upon or around the tubes 28. Around the starting fuel 38 there is a certain quantity of a second or main fuel part 40. The main fuel 40 fills substantially all of the remaining volume of the vessel 12 and surrounds or is otherwise in a heat transfer relation ship with the structure 18.

One example of a fuel composition for use within reaction chamber 10 comprises a starting fuel part 38 having equal molar components of lithium hydride, magnesium, and aluminum. This starting fuel composition is employed with a main fuel part 40 of aluminium and magnesium in a molar ratio of 2:1. Preferrably, the main fuel part and starting fuel part 38 are present in a ratio of about 4:1, on a weight basis.

Turning now to Figure 2, an alternative embodiment of the invention is shown in which similar reference numerals designate similar elements. The reaction chamber 10 includes a vessel 12 with a reaction water inlet 14, a hydrogen outlet 16, a heat transfer structure 18, and a filter structure 30. However, the main fuel part 40 is simply located in the lower portion of the vessel 12, with a layer of the starting fuel part 38 placed on the main fuel part 40 in the upper portion of the vessel 12. An inlet nozzle 26 at the lower end of the inlet 14 is located at a distance above the upper surface of the starting fuel part 38. The nozzle 26 is arranged to project water received via the inlet 14, downwardly upon and into the fuel 38, 40 either as a single penetrating stream, or as a plurality of such streams, or as a penetrating mist.

It is significant that the nozzle 26 is spaced sufficiently far away from the fuel 38, 40 that, even allowing for thermal expansion of the reactants, the nozzle 26 is not contacted by the molten fuel.

Having described the structure of the two preferred embodiments of the invention, their operation will now be described.

With respect to Figure 1, when it is desired to start operation of the Rankine cycle heat engine (not shown), water is supplied to the inlet 14 at a determined rate. The supplied water is distributed by the manifold 26 to the distribution tubes 28. The perforate distribution tubes 28 carry the supplied water into immediate contact with substantially all of the starting fuel part 38. This occurs because, as pointed out above, the starting fuel part 38 surrounds the tubes 28 as a relatively thin layer or coating. The supplied water reacts with the starting fuel part to produce lithium hydroxide and heat. The lithium hydroxide further reacts with the other constituents of the starting fuel part and with the main fuel part to produce hydrogen gas and additional heat.

The initial heat production from the starting fuel part 38 serves to increase both the temperature of the remaining fuel and its propensity to react with the water. In very short order, the entire mass of fuel is raised to a sufficiently high temperature that the fuel is molten and readily reacts with the water.

Figure 3 graphically depicts the time rate of hydrogen production from a reaction chamber in accordance with the invention with the passage of

time from the moment of first water injection into the reaction chamber. Line A represents, for comparison only, the rate of hydrogen production from a reaction chamber in accordance with the present Applicants alternative system described above. As line A represents, a reaction chamber according to this system initially produces hydrogen at a relatively low rate which increases slowly (portion $A_1$). Following the initially slow start, the reaction chamber reaches a plateau (portion $A_2$) of relatively stable hydrogen production rate. Finally, as the fuel mass nears exhaustion, the reaction chamber in this system produces hydrogen at an increased rate (portion $A_3$), leading to a drop off at exhaustion of the service life of the reaction chamber.

In contrast, line B in Figure 3 depicts the rate of hydrogen production from a reaction chamber according to the present invention. As line B shows, after an initial starting surge, the rate of hydrogen production rapidly attains a substantially uniform level throughout the service life of the reaction chamber. It will be understood, of course, that Figure 3 is for comparison purposes only. In fact, the actual rate of hydrogen production from a particular reaction chamber is variable in dependence upon many factors including the relative size of the chamber and the controlled rate of reaction water introduction.

Turning now to the reaction chamber of Figure 2, it will be noted that the inlet 14, and the nozzle 26 direct the water downwards onto and into the fuel 38, 40. Of course, the upper layer of the starting fuel part 38 are first contacted by the water, much

in the same fashion as in the reaction chamber of Figure 1. However, the nozzle 26 is at all times spaced apart from and above the zone of reaction which is formed where the reaction water reacts with the fuel parts 38 and 40. Because the nozzle 26 is not immersed in the molten fuel 38,40 there is virtually no chance of the nozzle 26 becoming plugged with fuel or reaction products. Furthermore, because the nozzle 26 is substantially free of heat transfer from the molten fuel 38, 40, high-temperature materials of construction for the nozzle are not necessary, and so the nozzle may be made of relatively common, inexpensive materials.

Surprisingly, actual tests on a reaction chamber similar to that of Figure 2 has shown that the bath of molten fuel does not, as might be assumed, require agitation from direct immersed reactant injection. Thus, the reaction is sufficiently vigorous that the stirring/mixing influence of a jet or stream of water injected from a nozzle immersed in the bath is unnecessary. Simply spraying the water upon the fuel will allow the reaction chamber to run to completion of the reactoin with an acceptably high utilisation of the fuel mass. Specifically these tests have shown a 95% or greater fuel utilisation may be expected from a reaction chamber according to Figure 2. The reaction chamber of Figure 1, it is believed, would provide a slightly higher percentage of fuel utilisation.

With both of the reaction chambers shown in Figure 1 and 2, the evolved hydrogen is filtered by filter structures 30 and provided via the outlet 16 for use in the Rankine cycle engine (not shown).

The fuel mixtures of the present invention are believed to offer a surprising and unexpected advantage by simplifying the required filter structure. The conflicting requirements for the filter structure 30 are that it be open to passage of hydrogen while being sufficiently closed to both fuel and reaction products that the latter are not allowed to pass downstream with the hydrogen via the outlet 16. Furthermore, it is essential that the filter does not clog. Surprisingly, the present fuel mixtures have been found to deposit reaction products on the filter 30 to an extent resulting in a self-regulating filter mechanism.

The filter 30 in the reaction chamber 10 according to Figure 2 employs a perforate plate 32 having apertures of 0.125" (3.2mm), size which represent a 60% open area of the total plate area. The felt metal pads 34, 36 are of 0.006" (0.15mm) filament size with 95μ" (2.4μm) pore size having a 60% theoretical density. During a test operation of such a reaction chamber, virtually perfect filtering of the evolved hydrogen was observed. The internal pressure of the reaction chamber was within acceptable limits, indicating that the filter 30 was not clogged or overly restrictive to the passage of hydrogen. There was also no indication of excessive openness or porosity in the filter. Surprisingly, ehen the reaction chamber was disassembled for visual inspection, the filter 30, and particularly pad 34, gave the appearance of being clogged with reaction products. The filter was not in fact clogged with respect to passage of evolved hydrogen, however, as the acceptably low internal pressure of the reaction chamber during operation indicated.

An examination of the start-up fuel reaction products of a test run indicated two product phases. The primary product phase was $LiAlO_2$. The smaller secondary reaction product phase was $MgAL_2O_4$ + $LiAL_5O_8$. The percentages of pure fuel metals remaining were Li less than 1%, Mg less than 1%, and Al less than 1%. LiOH and MgO were both present in trace amounts.

Thus, it may be concluded that the present invention provides novel fuel compositions for use in a reaction system of the type described. Two preferred embodiments of a reaction chamber are described together with methods of their operation and manufacture. The invention also represents a system which can provide a substantially uniform rate of hydrogen evolution and allows the use of reactant injection nozzles which are optionally either immersed in or spaced above the molten bath of reactive fuel. Finally, a significant and unexpected advantage results in the present invention in that the filtering of the evolved hydrogen becomes self regulating.

The starting and main fuel part reactions with water are believed to be as follows:

STARTING FUEL REACTIONS

1) $LiH + H_2O \rightarrow LiOH + H_2\uparrow + Q_{HEAT}$

2) $2LiOH + AL_2O_3 \rightarrow 2LiALO_2 + H_2O + Q$

3) $LiOH + H_2O + AL \rightarrow LiALO_2 + \frac{3}{2}H_2\uparrow + Q$

4) $Mg + H_2O \rightarrow MgO + H_2\uparrow + Q$

MAIN FUEL REACTIONS

1) $Mg + H_2O \rightarrow MgO + H_2\uparrow + Q$

2) $4MgO + 2AL \rightleftharpoons MgAL_2O_4 + 3Mg$

CLAIMS:

1. A reaction system for an engine in which a fuel is reacted with a reactant to produce heat which is converted to mechanical energy characterised in that the fuel is a two-part fuel, the first fuel part (38) comprising lithium hydride and a metal, and the second fuel part (40) comprising a metal, and in that the reactant first reacts with the first fuel part to liberate a gas and to produce heat which raises the temperature of the second fuel part to enable the second fuel part to react with the reactant in order to produce a gas and to produce heat.

2. A system as claimed in Claim 1 characterised in that the first fuel part is a hypergolic starting fuel part and the metal constituent comprises magnesium and/or aluminium.

3. A system as claimed in Claim 2 characterised in that the starting fuel part is composed essentially of lithium hydride, metallic magnesium and metallic aluminium in substantially equal molar relationship.

4. A system as claimed in any preceding claim characterised in that the second fuel part is a main fuel part which comprises magnesium and/or aluminium.

5. A system as claimed in Claim 4 characterised in that the main fuel part is composed essentially of metallic aluminium and metallic magnesium substantially in a 2:1 molar relationship, respectively.

6. A system as claimed in any preceding Claim in which the first fuel part and the second fuel part are present substantially in a 1:4 weight relationship respectively.

7. A system as claimed in any preceding Claim characterised in that the reactant is water and the gas produced by the first and second fuel parts is hydrogen.

8. A system as claimed in any preceding Claim characterised in that the fuel is reacted in a reaction chamber (10) having an inlet (14) for the reactant, and an outlet (16) for the gas produced, and heat transfer means (20) in heat exchange relationship with the fuel (38,40).

9. A system as claimed in Claim 8 characterised in that the gas produced leaves through the outlet via filter means (33) comprising a perforate plate (32) and a felt metal pad (34,36) between the fuel (38,40) and the outlet (16),thereby allowing substantially only gas produced to flow from the reaction chamber.

10. A system as claimed in Claim 8 or Claim 9 characterised in that the second fuel part (40) is disposed in a lower region of the chamber; the first fuel part (38) is disposed as a layer upon the second fuel part; the inlet (14) is located above and spaced apart from fuel, whereby reactant from the inlet first contacts the first fuel part and then the second fuel part; and the outlet (16) is located above the inlet (26).

11. A system as claimed in Claim 8 or Claim 9 characterised in that the outlet (14) includes foraminous distributors (28) disposed within the fuel, with the first fuel part (38) surrounding the distributors (28) and the second fuel part (40) surrounding the first fuel part (38).

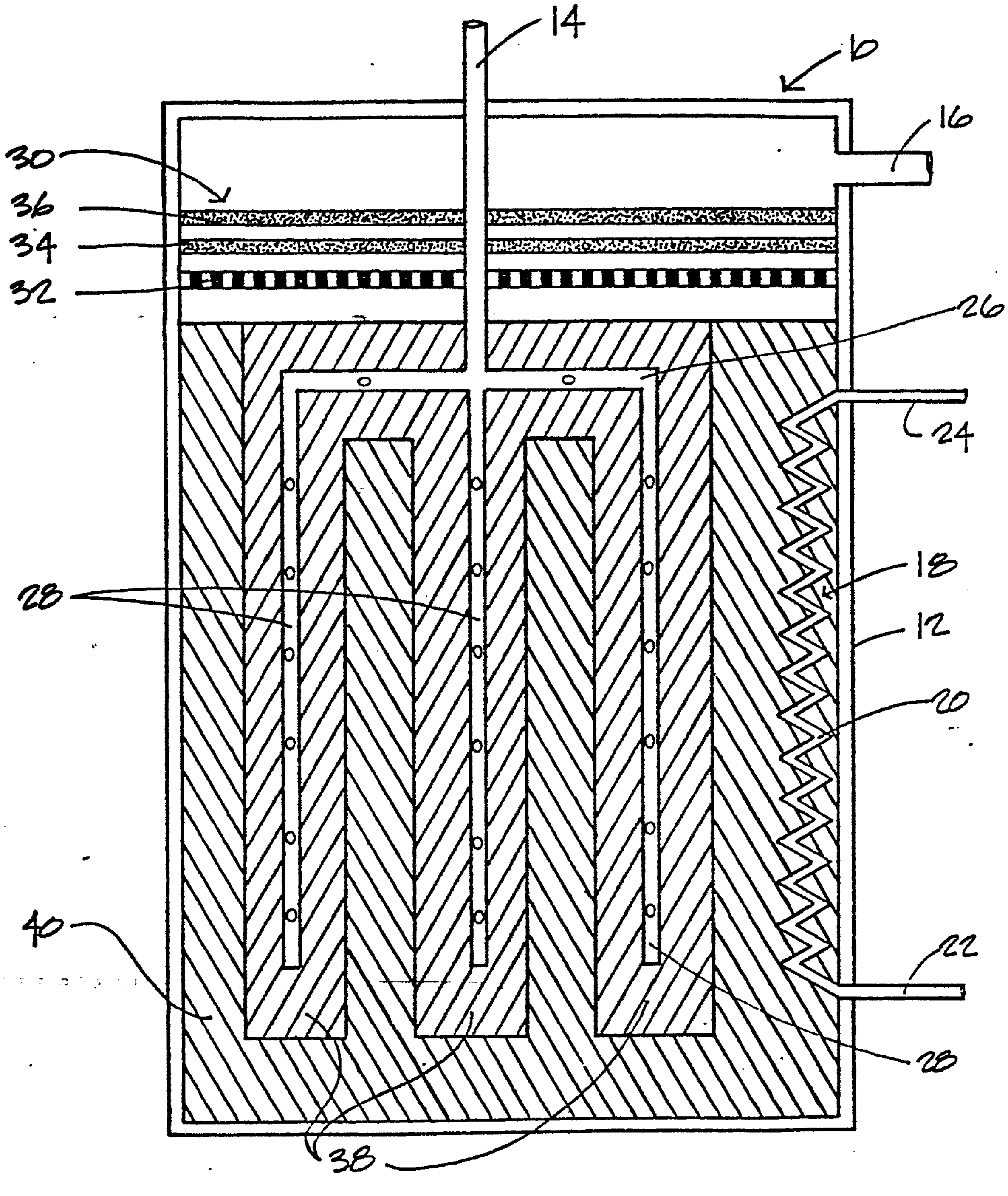


FIG. 1

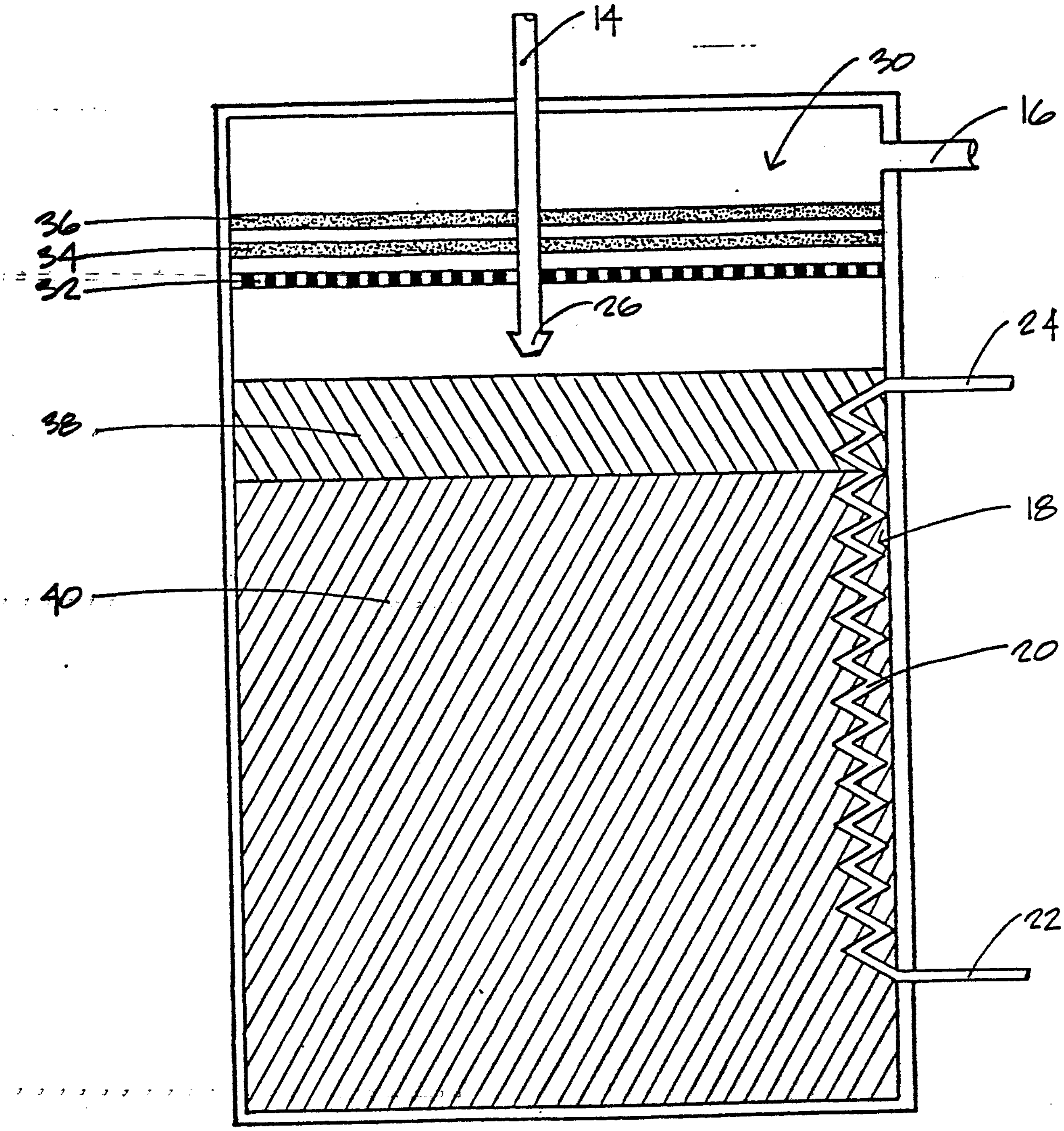


FIG. 2

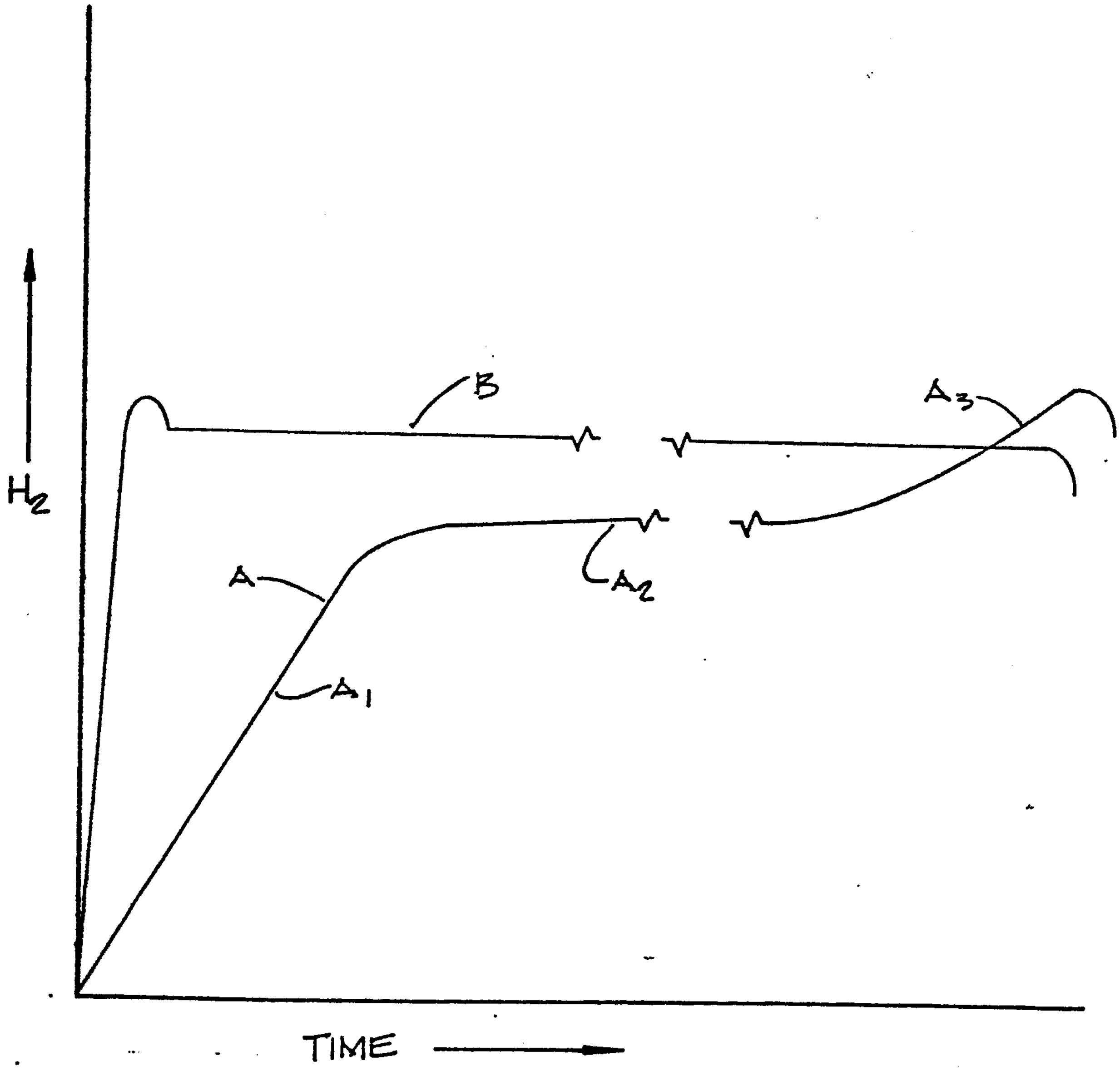


FIG. 3

European Patent Office

# EUROPEAN SEARCH REPORT

0188092

Application number

EP 85 30 9039

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-3 379 178 (CARL BOYARS)<br>* Column 1, lines 14-16, 24-68; column 2, lines 30-35; figure 2 * | 1,2,6, 11 | F 01 K 25/00<br>C 01 B 3/06<br>F 42 B 19/20 |
| A | US-A-3 158 994 (SOLID FUELS CORP.)<br>* Column 1, lines 9-18, 25-44, 64-72; column 2, lines 4-9; column 4, lines 27-38 * | 1-4,6-8 | |
| A | US-A-3 186 332 (TRW)<br>* Abstract; column 1, lines 23-25, 56-64 * | 1-4,8 | |
| A | CHEMICAL ABSTRACTS, vol. 91, no. 9, 27th August 1979, page 101, abstract no. 76261k, Columbus, Ohio, US; N.M. NOVIKOVA et al.: "Reaction of aluminum with water in the presence of activating additives", & ZH. NEORG. KHIM. 1979, 24(6), 1722-3 | | TECHNICAL FIELDS SEARCHED (Int. Cl.4)<br>F 01 K<br>F 22 B<br>F 42 B<br>C 01 B |
| A | CHEMICAL ABSTRACTS, vol. 102, no. 2, January 1985, page 131, abstract no. 8956m, Columbus, Ohio, US; K.G. SHCHERBINA: "Solid-phase reaction products in hydrogen generation processes", & PROBL. MASHINOSTR. 1983, 20, 83-6<br>----- | | |

The present search report has been drawn up for all claims

| Place of search | Date of completion of the search | Examiner |
|---|---|---|
| THE HAGUE | 07-03-1986 | ERNST J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82